# EUROPEAN PATENT APPLICATION

(11) **EP 1 826 150 A1**
(43) Date of publication of application: **29.08.2007**
(21) Application number: 07003559.7
(22) Date of filing: 21.02.2007
(51) Int. Cl.: B65D 88/16, A01F 25/14

(54) **A bag for silage**

(30) Priority: 28.02.2006 IE 20060145
(71) Applicant: Tabstar limited t/a Silasock R&D Limited, Kilbeggan Westmeath (IE)
(72) Inventor: O'Brien Vincent, Kilbeggan County Westmeath (IE)
(74) Representative: Boyce, Conor

(57) **Abstract**

A bag comprising at least one impermeable layer, the layer having at least one exhaust valve formed therein, the bag having an open end arranged to receive material for storage, the open end being arranged to releasably retain the material in the bag.

## Description

The present invention relates to a bag for silage.

Currently bales of silage are wrapped in polythene prior to storage. This involves a farmer buying or renting a specialist wrapping machine which picks up and wraps the bales of silage. Such bales release significant amounts of gas when stored and they need to be wrapped to an appropriate extent and tension to ensure that these gasses can vent properly but that the bale is sufficiently wrapped to preserve the silage.

In any case, after first use, the wrapping which is not re-usable, must be disposed of with commensurate environmental and economic drawbacks.

According to the present invention there is provided a bag comprising at least one impermeable layer, said layer having at least one exhaust valve formed therein, the bag having an open end arranged to receive material for storage, said open end being arranged to releasably retain said material in said bag.

Preferably, said bag comprises an inner rubber layer and an outer fabric based layer. Preferably said layers are at least partially in intimate contact.

Preferably, said exhaust valve is located in a closed end of said bag.

Preferably, said open end of said outer layer is closable independently of said open end of said inner layer.

Preferably, said open end is cooperable with a loading frame to retain said bag in a open state in which it is arranged to receive material to be stored in said bag.

According to a further aspect there is provided a loading frame arranged to cooperate with a bag according to the present invention, the loading frame comprising one or more members arranged to engage a portion of the open end of said bag to retain said bag in an open state in which it is arranged to receive material to be stored in said bag.

Embodiments of the invention will now be described, by way of example, with reference to the accompanying drawings, in which:
Figure 1 shows a bag according to a preferred embodiment in an open and upright state;
Figure 2 shows the bag of Figure 1 in an inverted state;
Figures 3 and 4 show the bag of Figure 1 in a closed state;
Figure 5 is a cross-section of a partially closed bag according to a variant of the preferred embodiment and including a bale of silage;
Figure 6 is a cross-section of the bag of Figure 5 in a closed state;
Figure 7 shows a number of bags of Figures 5 & 6 in a stored state;
Figure 8 shows in detail a valve for the bag according to the preferred embodiments;
Figure 9 is a top view of a bag mounted on a loading frame (partially shown) and receiving a bale of silage;
Figure 10 shows the mounting of the bag of Figure 9 in more detail;
Figure 11 is a front view of the bag and loading frame of Figure 9; and
Figure 12 shows a bag of the preferred embodiments mounted on a loading frame and being loaded with a bale of silage.

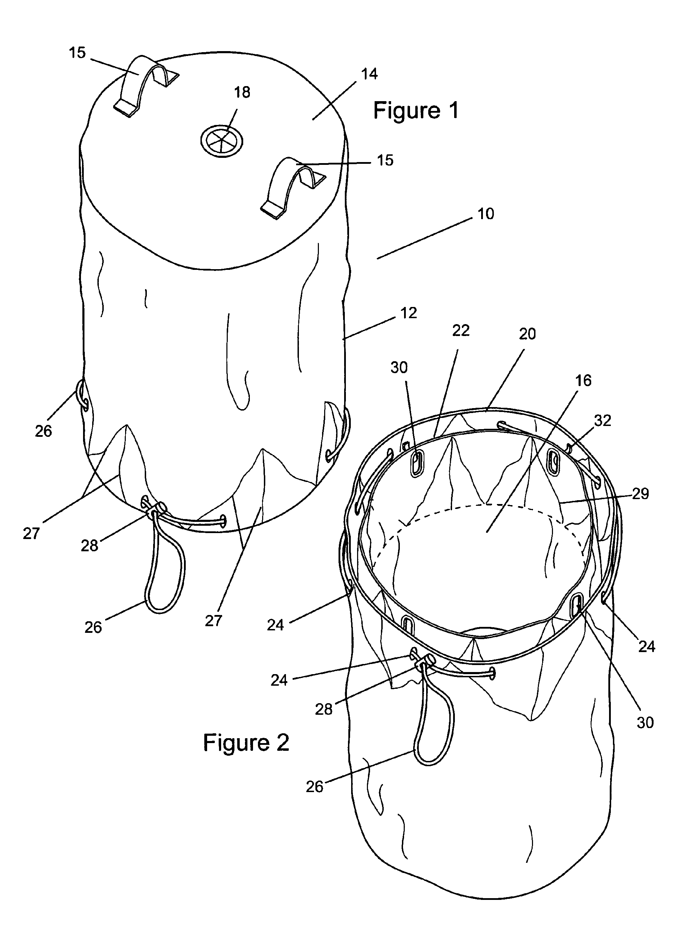

Referring now to Figure 1, there is a shown a bag 10 for silage according to a preferred embodiment of the present invention. The bag comprises a two-ply skirt 12 which when opened out generally takes the form of a cylinder. The skirt is closed at one end with a two-ply bottom panel 14. At the opposite end, there is an open mouth 16 for receiving a bale of silage (not shown).

Within the bottom panel 14 there is provided an exhaust valve 18 which passes through the two layers of the bottom panel and which is arranged to allow gas to escape from within the bag when in a closed state.

Also provided on the bottom panel is a pair of handles 15, which allows the bag to be hung when out of use or in storage and also allows the bag to be manipulated more easily.

Referring now to Figure 2, each of the outer layer 20 and inner layer 22 of the bag can be seen. The outer layer 20 preferably comprises a hessian weave plastic coated on each surface. The inner layer 22 preferably comprises heavy duty rubber. The outer layer serves to protect the inner layer from wear and so to preserve its hermitic seal when a bale is located in the bag.

The layers are in intimate contact across the bottom panel and for most of the length of the shirt. They are preferably glued or welded to one another. Towards the open end of the shirt, the inner and outer layers separate as shown.

Close to the hem of the outer layer 20, there is provided a number of eyelets 24 through which a belt 26 is looped. A toggle 28 is provided on the belt 26, so that when the belt is drawn to close the outer layer, toggle enables the belt to hold the layer closed.

At approximately the same distance from the hem, the inner layer is provided with 4 eyelets 30 disposed around the periphery of the layer. Each eyelet 30 lies in register with a loop 32 fixed to the inside surface of the outer layer, each of which can pass through a respective eyelet 30.

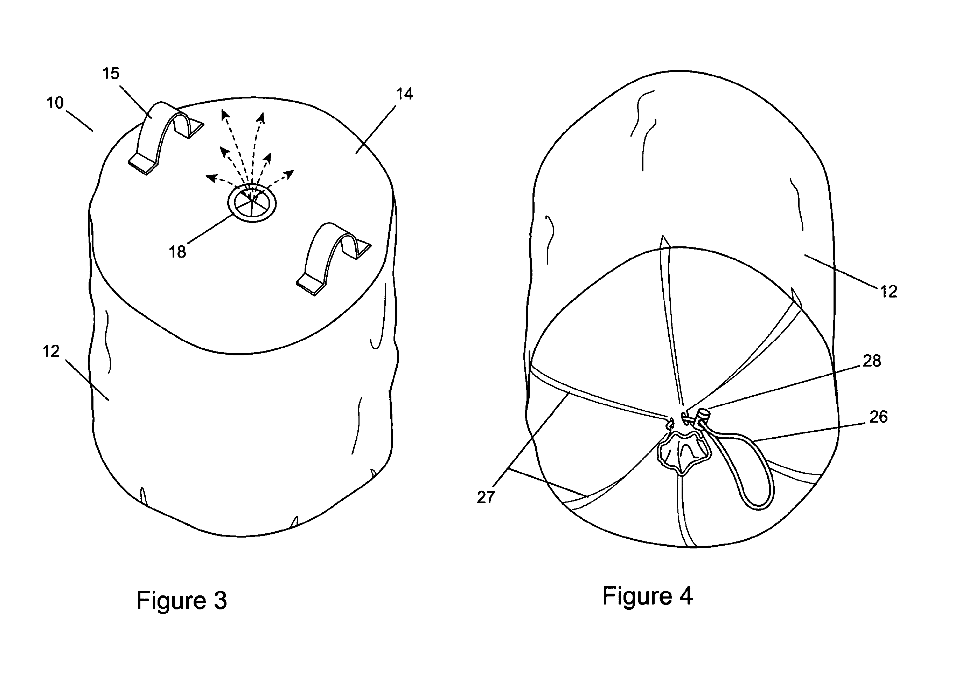

A number of seams 27, 29 are defined around the periphery of both the outer and inner layers respectively. These can defined by a heat roller or the like, but in particular in relation to the inner layer, these should not involve a perforation of the layer. The seams run from a depth in the bag generally around the extent to which a bale fills the bag to the open mouth of the bag. In the preferred embodiment, the seams define triangular segments which cause this portion of the skirt to neatly fold into pleats when the belt is tied, so closing the bag around a bale located in the bag, Figure 4.

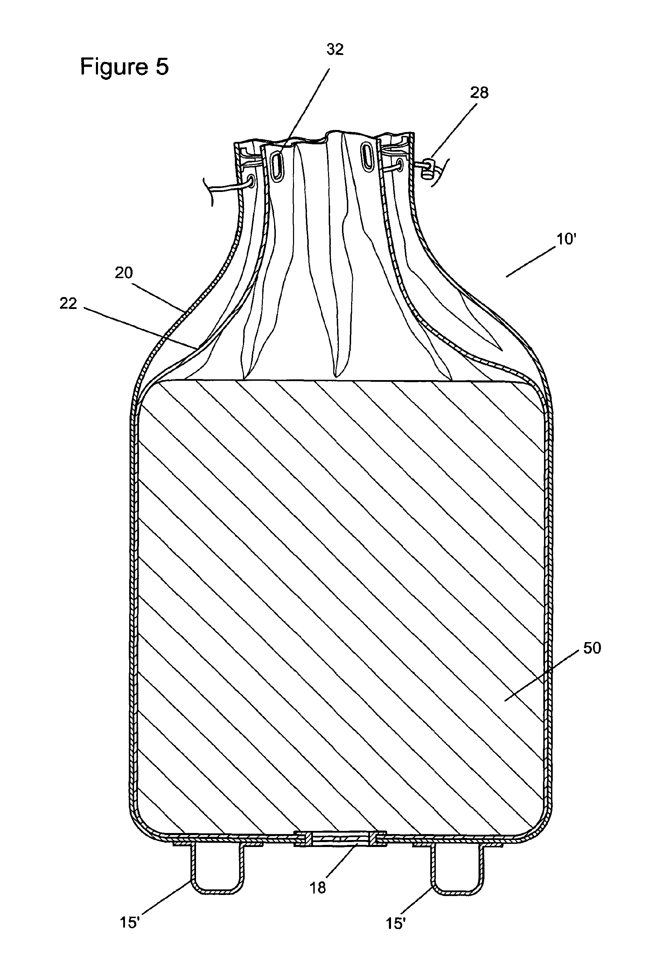

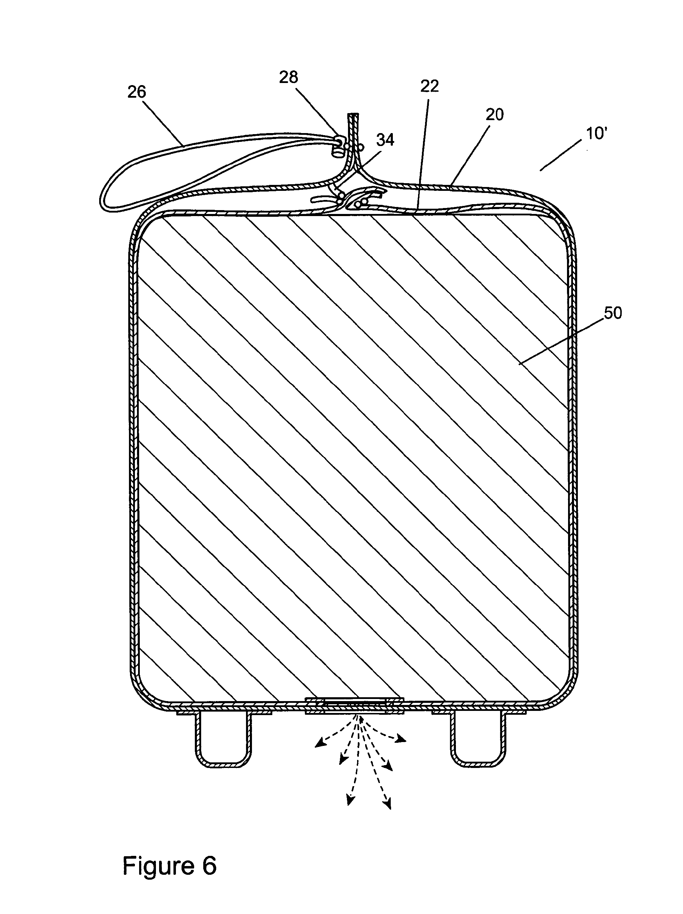

Referring now to Figures 5 and 6, there are shown a bale and cross-sections of a variant 10' of the bag 10 of Figures 1-4 in a partially closed and closed states respectively. It can be seen from Figure 6 that in common with the bag 10, the inner layer can be closed with a conventional cable tie 34, and then afterwards the outer layer closed over this.

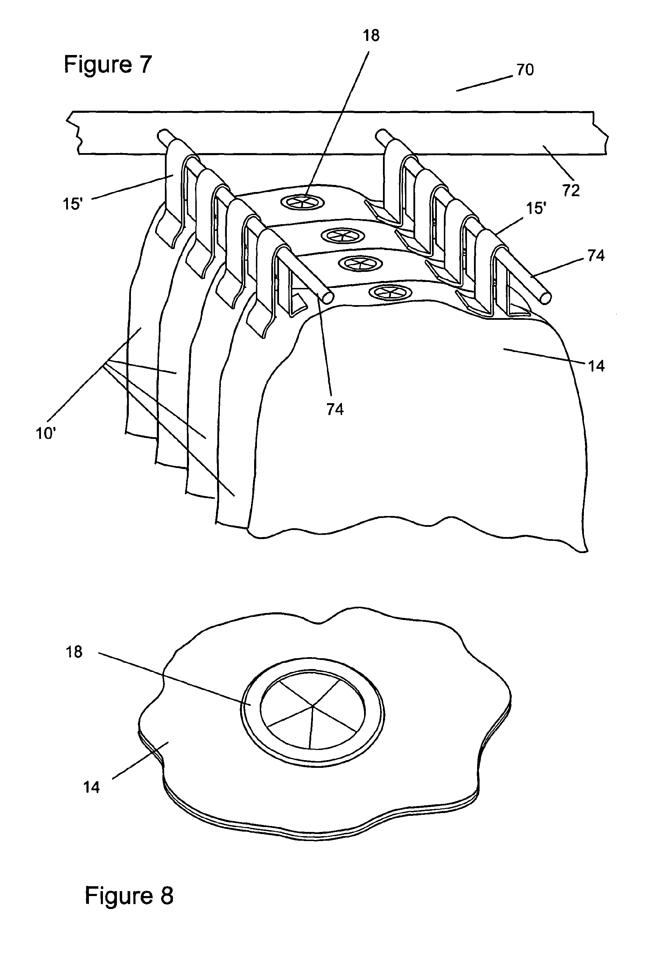

Figure 7 shows a number of the bags 10' in storage. A storage rack 70 comprises a backplate 72 fixed to a wall and two rails 74 extending from the backplate. In this case, the handles 15' are arranged on the bottom panel so that they can locate over the rails 74. However, it will be seen that where the handles are arranged as in Figures 1 to 4, a suitable alternative rack (not shown) can be employed.

A simple way for the bag to be located over a bale is for the bale to be first picked up on the forks of a tractor. The bag can then be located over the bale, before the bale in placed in its desired storage location by the tractor. Once unloaded from the tractor, the inner and outer layers can be tied as shown in Figure 6. However, in practice the bag may prove to be too heavy or unwieldy for most users to shift over a bale.

Thus, the preferred embodiments of the invention described above are designed to be located on a loading frame arranged to receive a bag into which a bale is placed.

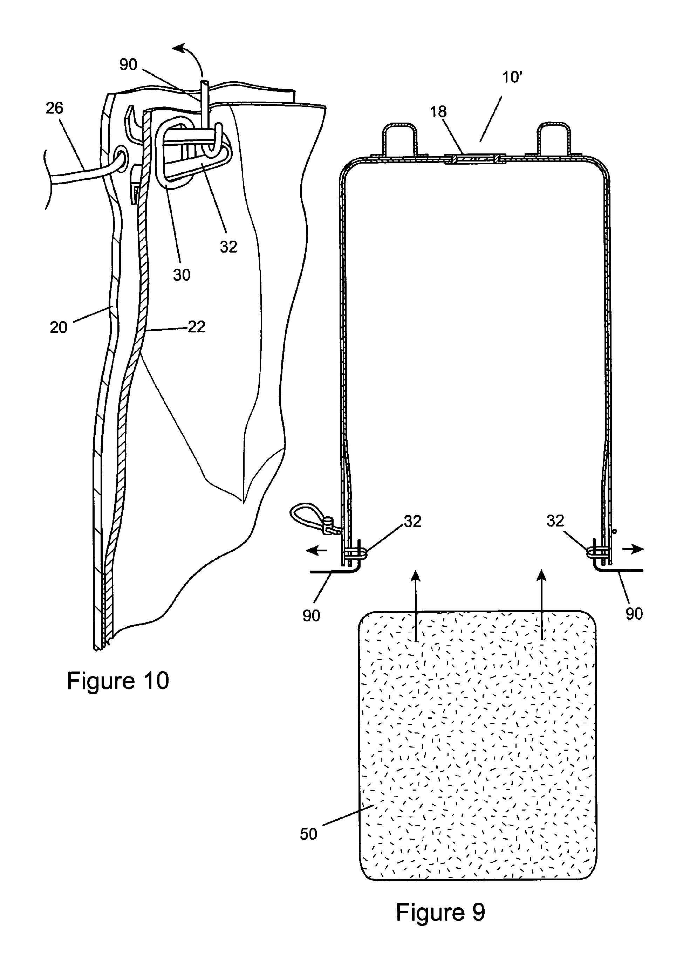

Figures 9 and 10 show the bag 10' located on hooks 90 of the loading frame (not shown). The bag is fixed on to these hooks by drawing each of the loops 32 through their respective eyelets 30 and then locating a loop on a respective hook. This keeps the mouths of both the inner and outer layer in a fully open state while a bale 50 is loaded into the bag.

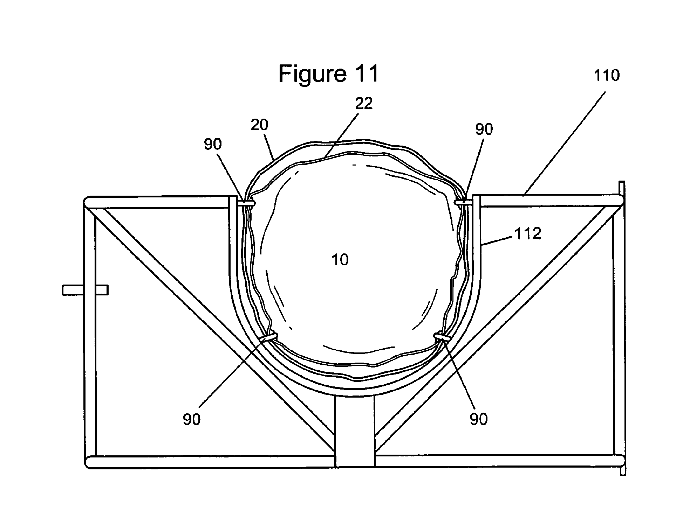

A particularly useful form of loading frame is shown in Figure 11. In this case the frame is implemented within a conventional type farm gate 110, in which a U-shaped frame 112 is defined. Four hooks 90 are located around the edge of the frame 112 and a bag 10,10' can be located onto the hooks 90 as described above.

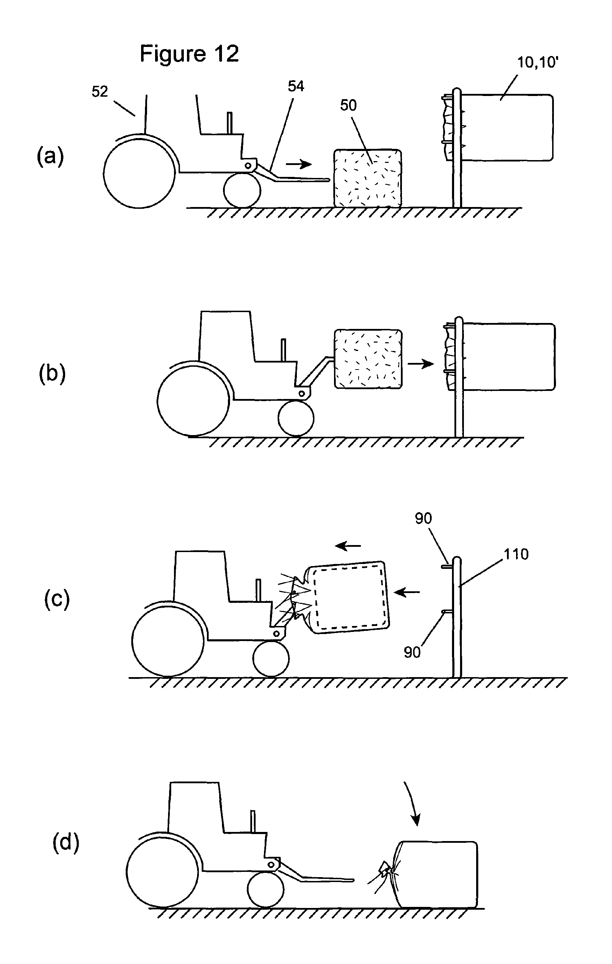

In order to load a bale into the bag, a tractor 52 having front (or rear) forks 54 is driven into a bale 50, Figure 12(a). The bale is lifted, Figure 12(b) and offered to the bag 10,10'. The bale is then driven into the bag and once located in the bag, the bagged bale is withdrawn from the frame 110, Figure 12(c). The bag can then be set down in its desired storage location and once released from the forks of the tractor, the inner and outer layers can be tied as described above to seal the silage within the bag.

It can be seen that the above system allows bales to be bagged safely by one operator who alternatively locates bags on the frame and then drives the bale into the bag.

It will be seen that the frame 110 is particularly useful for farmers who draw silage from the same field(s) every year, as the frame 110 can simply replace an existing gate in such fields. A suitable bridge portion can temporarily close the U-shaped frame when not in use.

Improvements of the frame are also possible. So for example, in order to avoid damage to bags located on the hooks 90 from a bale being overdriven into the bag, the hooks 90 can be spring loaded to release a bag when a bale bottoms out within the bag.

It will be seen that once sealed, the silage will begin to release gas and that the vent 18 allows for the release of such gas so preventing damage to the bag without breaking the seal provided by the bag. It will be seen that as many of such valves as are required can be located about the bag to ensure proper ventilation of the bag.

It will be seen that bags according to the present invention provide a durable, reliable and re-usable option for storing silage. They also enable bales of silage to be bagged in a simple manner and possibly without requiring machinery other than a standard lifting tractor.

It will also be seen that while the bags of the preferred embodiments have been described for use with bales of silage, the bags could equally be used with any other material which required such storage.

In further variants of the invention, the outer layer could incorporate a UV stabiliser to prevent breakdown of the material when left in exposed conditions. Similarly, the bag could include an anti-vermin ingredient or indeed could simply be marked with a pest deterrent such as a large X.

## Claims

1. A bag comprising at least one impermeable layer, said layer having at least one exhaust valve formed therein, the bag having an open end arranged to receive material for storage, said open end being arranged to releasably retain said material in said bag.

2. A bag as claimed in claim 1 further comprising an inner rubber layer and an outer fabric based layer.

3. A bag as claimed in claim 2 wherein said layers are at least partially in intimate contact.

4. A bag as claimed in claim 1 wherein said exhaust valve is located in a closed end of said bag.

5. A bag as claimed in claim 2 wherein said open end of said outer layer is closable independently of said open end of said inner layer.

6. A bag as claimed in claim 1 wherein said open end is cooperable with a loading frame to retain said bag in a open state in which it is arranged to receive material to be stored in said bag.

7. A loading frame arranged to cooperate with a bag according to claim 1, the loading frame comprising one or more members arranged to engage a portion of the open end of said bag to retain said bag in an open state in which it is arranged to receive material to be stored in said bag.
